# EUROPEAN PATENT SPECIFICATION

(11) **EP 4 203 096 B1**
(45) Date of publication and mention of the grant of the patent: **03.06.2026**
(21) Application number: 22170300.2
(22) Date of filing: 27.04.2022
(51) Int. Cl.: H01M 4/136, H01M 4/1397, H01M 4/58, H01M 10/04, H01M 10/052, C01B 25/45, C01G 49/00

(54) **CARBON-COATED CATHODE MATERIAL AND PREPARATION METHOD THEREOF**
KOHLENSTOFFBESCHICHTETES KATHODENMATERIAL UND HERSTELLUNGSVERFAHREN DAVON
MATÉRIAU DE CATHODE REVÊTU DE CARBONE ET SON PROCÉDÉ DE PRÉPARATION

(30) Priority: 27.12.2021 TW 110148959
(43) Date of publication of application: 28.06.2023
(73) Proprietor: Advanced Lithium Electrochemistry Co., Ltd., Taoyuan City 330 (TW)
(72) Inventor: Hsieh, Han-Wei, 330 Taoyuan City (TW); Li, Yi-Ting, 330 Taoyuan City (TW); Lin, Yuan-Kai, 330 Taoyuan City (TW)
(74) Representative: 2K Patent Partnerschaft mbB

(56) References cited:
- JP-B1- 6 841 362
- US-A1- 2010 112 449
- US-A1- 2014 004 421
- US-A1- 2015 064 557

## Description

### FIELD OF THE INVENTION

The present disclosure relates to a cathode material and a preparation method thereof, and more particularly to a carbon-coated cathode material and a preparation method thereof for improving a discharge performance of a secondary battery.

### BACKGROUND OF THE INVENTION

In recent years, with blooming development of electronic products, the demand for portable and reusable secondary batteries is gradually increasing. Among different types of secondary batteries, lithium-ion secondary batteries have great development potential with characteristics of high energy density, light weight, high charge/discharge cycle life, and no memory effect.

As a cathode material for a lithium-ion secondary battery, lithium metal phosphate material with olivine structure has advantages of high structural stability, high cycle life and high safety. However, the olivine structure also leads to disadvantages of low electrical conductivity and low lithium ion diffusion coefficient. With the disadvantages, the electrode polarization of the lithium ion secondary battery occurs during high-current charging and discharging, and the battery performance is reduced.

Therefore, there is a need to provide a carbon-coated cathode material and a preparation method thereof for improving a discharge performance of a secondary battery.

### SUMMARY OF THE INVENTION

An object of the present disclosure is to provide a carbon-coated cathode material and a preparation method thereof for improving a discharge performance of a secondary battery. The carbon-coated cathode material includes a lithium metal phosphate particle and a carbon coating layer, and the carbon coating layer is coated on the lithium metal phosphate particle. The carbon coating layer is formed by, for example, two heat treatments. Two carbon sources such as carbohydrate are added in the two heat treatments, respectively. A first carbon coating portion is formed on the lithium metal phosphate particle by adding the first carbon source in the first heat treatment. With the first carbon coating portion, the second carbon source added in the second heat treatment is easily adhered on the surface of the particle through the cohesive force between the same substances, and the uniform carbon coating layer is formed after the second heat treatment. Preferably but not exclusively, the weight of the first carbon source is equal to or less than the weight of the second carbon source. The first carbon source has a first weight percentage relative to the lithium metal phosphate particle, and the first weight percentage of the first carbon source is equal to or less than 0.5 wt%. The second carbon source has a second weight percentage relative to the lithium metal phosphate particle, and the second weight percentage of the second carbon source is ranged from 0.4 wt% to 2 wt%. By adding less carbon in the first heat treatment, the first carbon coating portion with a dot-like structure is formed. The dot-like structure facilitates the adherence of the second carbon source added later. Each carbon dot of the dot-like structure has a median diameter ranged from 10 nm to 50 nm. The median diameter is obtained by an analysis of a scanning electron microscope (SEM) or a transmission electron microscope (TEM). Furthermore, by controlling the weight of added carbon, the problem of decreased lithium-ion transfer rate due to excessive addition of carbon is prevented, and the discharge performance of the secondary battery is ensured. Preferably but not exclusively, the first heat treatment has a first highest temperature ranged from 500 °C to 700 °C, so as to facilitate the nucleation of lithium metal phosphate particles and the cracking of the first carbon source. The preparation method of the carbon-coated cathode material of the present disclosure is simple, and the carbon-coated cathode material formed thereby has good discharge performance. Specifically, the carbon-coated cathode material maintains high capacity at different charge and discharge rates (C-rate).

In accordance with an aspect of the present disclosure, a carbon-coated cathode material with two carbon coating portions added in two heat treatments and incrementally is provided. The carbon-coated cathode material includes a lithium metal phosphate particle and a carbon coating layer. The carbon coating layer is coated on the lithium metal phosphate particle. The carbon coating layer is formed by a first heat treatment and a second heat treatment. A first carbon source is added in the first treatment, and a second carbon source is added in the second heat treatment. The first carbon source has a first weight percentage relative to the lithium metal phosphate particle. The second carbon source has a second weight percentage relative to the lithium metal phosphate particle. The first weight percentage of the first carbon source is equal to or less than the second weight percentage of the second carbon source.

In an embodiment, the lithium metal phosphate particle includes a Li-M-O based material, and M is one selected from a group consisting of nickel, cobalt, manganese, magnesium, titanium, aluminum, tin, chromium, vanadium, molybdenum and a combination thereof.

In an embodiment, the first carbon source has a first median diameter ranged from 10 nm to 50 nm. The second carbon source has a second median diameter ranged from 10 nm to 50 nm. The first median diameter of the first carbon source and the second median diameter of the second carbon source are obtained by an analysis of a scanning electron microscope (SEM) or a transmission electron microscope (TEM).

In an embodiment, the lithium metal phosphate particle has a median diameter ranged from 0.05 µm to 2 µm.

The first weight percentage of the first carbon source is equal to or less than 0.5 wt%.

The second weight percentage of the second carbon source is ranged from 0.4 wt% to 2 wt%.

In an embodiment, a first secondary particle is formed by a lithium metal phosphate matrix and the first carbon source after the first heat treatment. The first secondary particle has a specific surface area ranged from 5 m²/g to 30 m²/g.

In an embodiment, the first secondary particle is subjected to a grinding process, and the first secondary particle has a median diameter ranged from 0.1 µm to 2 µm after the grinding process.

In an embodiment, the first heat treatment has a first highest temperature ranged from 500 °C to 700 °C, and the first heat treatment has a first soaking time ranged from 1 hour to 5 hours at the first highest temperature of the first heat treatment. The second heat treatment has a second highest temperature ranged from 700 °C to 850 °C, and the second heat treatment has a second soaking time ranged from 1 hour to 5 hours at the second highest temperature of the second heat treatment.

In accordance with another aspect of the present disclosure, a preparation method of a carbon-coated cathode material is provided. The preparation method of the carbon-coated cathode material includes steps of: (a) mixing a lithium metal phosphate matrix and a first carbon source and subjecting the lithium metal phosphate matrix and the first carbon source to a first heat treatment to form a first secondary particle, wherein the first secondary particle is formed by an aggregation of a plurality of first primary particles, wherein each one of the plurality of first primary particles includes a lithium metal phosphate particle and a first carbon coating portion, and the first carbon coating portion is coated on the lithium metal phosphate particle; (b) mixing the first secondary particle and a second carbon source to form a second secondary particle, wherein the second secondary particle is formed by an aggregation of a plurality of second primary particles, wherein each one of the second primary particles includes one of the first primary particles and a second carbon coating portion coated on the one of the first primary particles, wherein the first carbon source has a first weight percentage relative to the lithium metal phosphate particle, the second carbon source has a second weight percentage relative to the lithium metal phosphate particle, and the first weight percentage of the first carbon source is equal to or less than the second weight percentage of the second carbon source; and (c) subjecting the second secondary particle to a second heat treatment to form the carbon-coated cathode material, wherein the carbon-coated cathode material includes the lithium metal phosphate particle and a carbon coating layer, and the carbon coating layer is coated on the lithium metal phosphate particle, wherein the carbon coating layer is formed by the first carbon coating portion and the second carbon coating portion.

In an embodiment, the lithium metal phosphate particle includes a Li-M-O based material, and M is one selected from a group consisting of nickel, cobalt, manganese, magnesium, titanium, aluminum, tin, chromium, vanadium, molybdenum and a combination thereof.

In an embodiment, the first carbon source has a first median diameter ranged from 10 nm to 50 nm. The second carbon source has a second median diameter ranged from 10 nm to 50 nm. The first median diameter of the first carbon source and the second median diameter of the second carbon source are obtained by an analysis of a scanning electron microscope or a transmission electron microscope.

In an embodiment, the lithium metal phosphate particle has a median diameter ranged from 0.05 µm to 2 µm.

The first weight percentage of the first carbon source is equal to or less than 0.5 wt%.

The second weight percentage of the second carbon source is ranged from 0.4 wt% to 2 wt%.

In an embodiment, the first secondary particle has a specific surface area ranged from 5 m²/g to 30 m²/g.

In an embodiment, the step (a) further includes a step of: (a1) grinding the first secondary particle, wherein the first secondary particle has a median diameter ranged from 0.1 µm to 2 µm after grinding.

In an embodiment, the first secondary particle and the second carbon source are ground before mixing. The first secondary particle has a median diameter ranged from 0.05 µm to 2 µm after grinding. The second carbon source has a median diameter ranged from 0.05 µm to 2 µm after grinding.

In an embodiment, the first secondary particle and the second carbon source are mixed to form the second secondary particle through a spray drying process. The second secondary particle has a median diameter ranged from 2 µm to 50 µm.

In an embodiment, the first heat treatment has a first highest temperature ranged from 500 °C to 700 °C, and the first heat treatment has a first soaking time ranged from 1 hour to 5 hours at the first highest temperature of the first heat treatment. The second heat treatment has a second highest temperature ranged from 700 °C to 850 °C, and the second heat treatment has a second soaking time ranged from 1 hour to 5 hours at the second highest temperature of the second heat treatment.

### BRIEF DESCRIPTION OF THE DRAWINGS

FIG. 1 is a schematic view illustrating a first secondary particle according to an embodiment of the present disclosure;
FIG. 2 is a schematic view illustrating a second secondary particle according to an embodiment of the present disclosure;
FIG. 3 is a schematic view illustrating a carbon-coated cathode material according to an embodiment of the present disclosure;
FIG. 4 is a flow chart of a preparation method of the carbon-coated cathode material according to an embodiment of the present disclosure;
FIG. 5 is a time-temperature curve of a first heat treatment according to an embodiment of the present disclosure;
FIG. 6 is a time-temperature curve of a second heat treatment according to an embodiment of the present disclosure;
FIG. 7 is a charge-discharge characteristic diagram of a comparative example and a demonstrative example at a C-rate of 0.1C; and
FIG. 8 is a charge-discharge characteristic diagram of the comparative example and the demonstrative example at a C-rate of 5C.

### DETAILED DESCRIPTION OF THE PREFERRED EMBODIMENT

The present disclosure will now be described more specifically with reference to the following embodiments. It is to be noted that the following descriptions of preferred embodiments of this invention are presented herein for purpose of illustration and description only. It is not intended to be exhaustive or to be limited to the precise form disclosed. Although the wide numerical ranges and parameters of the present disclosure are approximations, numerical values are set forth in the specific examples as precisely as possible. In addition, although the "first," "second," "third," and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and / or" and the like may be used herein for including any or all combinations of one or more of the associated listed items. Alternatively, the word "about" means within an acceptable standard error of ordinary skill in the art-recognized average. In addition to the operation / working examples, or unless otherwise specifically stated otherwise, in all cases, all of the numerical ranges, amounts, values and percentages, such as the number for the herein disclosed materials, time duration, temperature, operating conditions, the ratio of the amount, and the like, should be understood as the word "about" decorator. Accordingly, unless otherwise indicated, the numerical parameters of the present invention and scope of the appended patent proposed is to follow changes in the desired approximations. At least, the number of significant digits for each numerical parameter should at least be reported and explained by conventional rounding technique is applied. Herein, it can be expressed as a range between from one endpoint to the other or both endpoints. Unless otherwise specified, all ranges disclosed herein are inclusive.

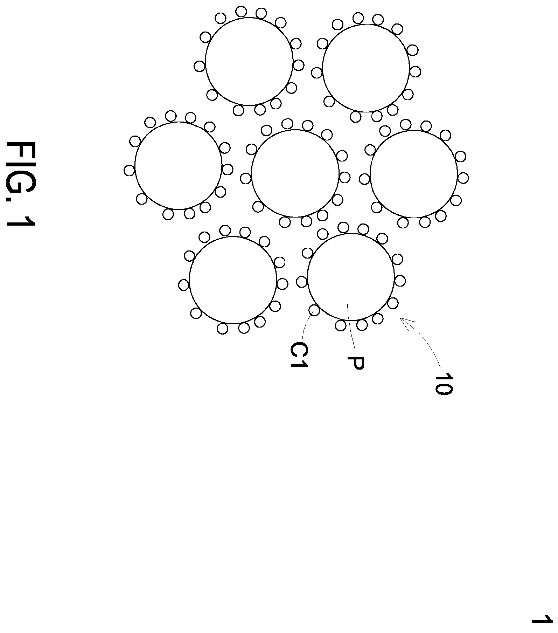

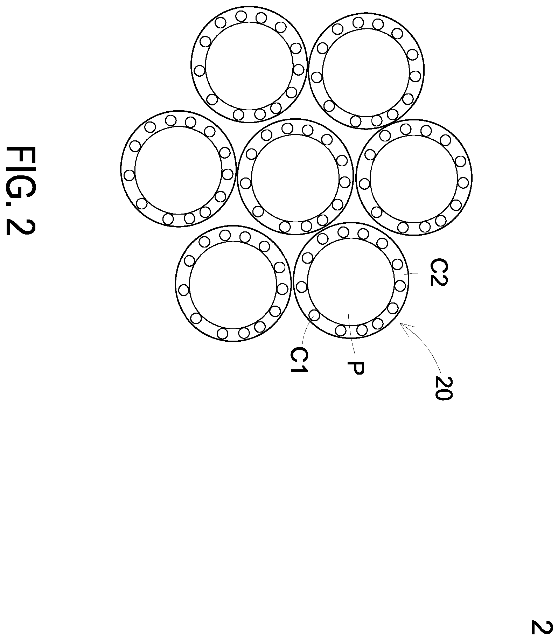

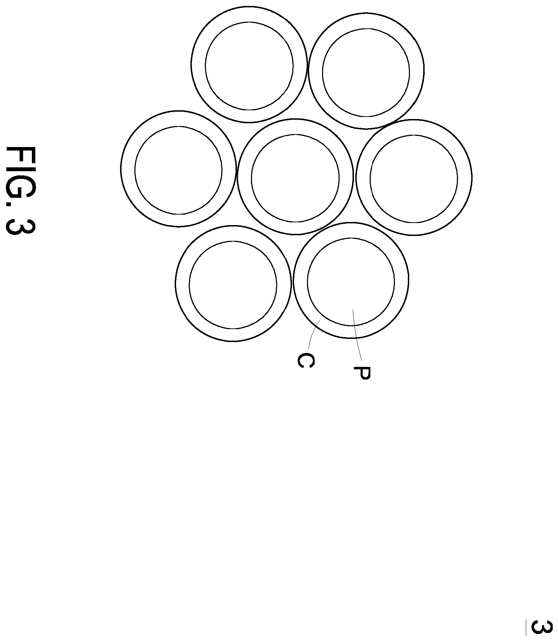

Refer to FIGS. 1 to 3. FIG. 1 is a schematic view illustrating a first secondary particle according to an embodiment of the present disclosure. FIG. 2 is a schematic view illustrating a second secondary particle according to an embodiment of the present disclosure. FIG. 3 is a schematic view illustrating a carbon-coated cathode material according to an embodiment of the present disclosure. In the embodiment, the carbon-coated cathode material 3 includes a lithium metal phosphate particle P and a carbon coating layer C. The carbon coating layer C is coated on the lithium metal phosphate particle P. The carbon coating layer C is formed by a first heat treatment and a second heat treatment. A first carbon source is added in the first treatment, and a second carbon source is added in the second heat treatment. The first carbon source has a first weight percentage relative to the lithium metal phosphate particle P. The second carbon source has a second weight percentage relative to the lithium metal phosphate particle P. The weight percentage of the first carbon source is equal to or less than the weight percentage of the second carbon source. In the embodiment, a lithium metal phosphate matrix and the first carbon source are subjected to the first heat treatment after being mixed, and a first secondary particle 1 is formed. Preferably but not exclusively, the first secondary particle 1 and the second carbon source are mixed, and a second secondary particle 2 is formed. The second secondary particle 2 is subjected to the second heat treatment, and the carbon-coated cathode material 3 is formed. In the embodiment, the first secondary particle 1 includes the lithium metal phosphate particle P and a first carbon coating portion C1. The second secondary particle 2 includes the first secondary particle 1 and a second carbon coating portion coated on the first secondary particle 1. With the previously added first carbon source in the first heat treatment, the first carbon coating portion C1 is formed on the surface of the lithium metal phosphate particle P. Thereby, the second carbon source added in the second heat treatment is easily adhered on the surface of the particle, and the uniform carbon coating layer C is formed.

In the embodiment, the lithium metal phosphate particle P includes a Li-M-O based material, and M is one selected from a group consisting of nickel, cobalt, manganese, magnesium, titanium, aluminum, tin, chromium, vanadium, molybdenum and a combination thereof. In the embodiment, the first carbon source has a first median diameter ranged from 10 nm to 50 nm. The second carbon source has a second median diameter (D50) ranged from 10 nm to 50 nm. The first median diameter of the first carbon source and the second median diameter of the second carbon source are obtained by an analysis of a scanning electron microscope (SEM) or a transmission electron microscope (TEM). Certainly, the present disclosure is not limited thereto. Other instruments that can perform surface analysis are suitable for detecting the first median diameter of the first carbon source and the second median diameter of the second carbon source. In the embodiment, the lithium metal phosphate particle has a median diameter ranged from 0.05 µm to 2 µm.

The first weight percentage of the first carbon source is equal to or less than 0.5 wt%, and the second weight percentage of the second carbon source is ranged from 0.4 wt% to 2 wt%. By adding less carbon in the first heat treatment, a dot-like structure facilitating the adherence of the second carbon source added later is formed. Thereby, the problem of decreased lithium ion transfer rate due to excessive addition of carbon is prevented, and the discharge performance of the secondary battery is ensured.

In the embodiment, the first secondary particle 1 has a specific surface area ranged from 5 m²/g to 30 m²/g. Preferably but not exclusively, the specific surface area of the first secondary particle 1 is detected by a BET surface area analysis. The first secondary particle 1 is, for example, subjected to a grinding process, and the first secondary particle 1 has a median diameter ranged from 0.1 µm to 2 µm after the grinding process.

In the embodiment, the first heat treatment has a first highest temperature ranged from 500 °C to 700 °C, and the first heat treatment has a first soaking time ranged from 1 hour to 5 hours at the first highest temperature of the first heat treatment. The second heat treatment has a second highest temperature ranged from 700 °C to 850 °C, and the second heat treatment has a second soaking time ranged from 1 hour to 5 hours at the second highest temperature of the second heat treatment. In the embodiment, the first heat treatment has a first heating rate of 3 °C/min, and the second heat treatment has a second heating rate of 3 °C/min.

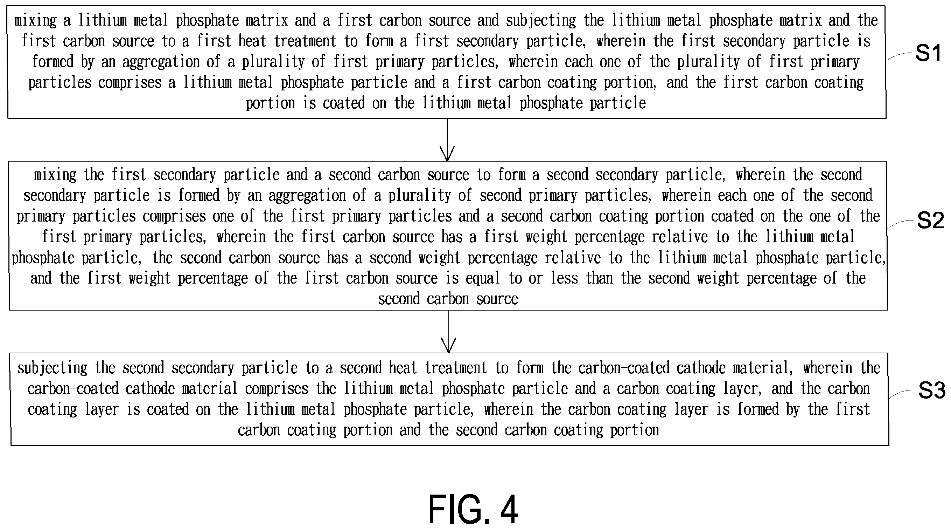

Refer to FIG. 4. FIG. 4 is a flow chart of a preparation method of the carbon-coated cathode material according to an embodiment of the present disclosure. The preparation method of the carbon-coated cathode material 3 includes following steps. Firstly, the lithium metal phosphate matrix and the first carbon source are mixed and subjected to the first treatment, and the first secondary particle is formed, as shown in a step S1. The first secondary particle 1 is formed by an aggregation of a plurality of first primary particles 10. Each one of the plurality of first primary particles 10 includes the lithium metal phosphate particle P and the first carbon coating portion C1. The first carbon coating portion C1 is coated on the lithium metal phosphate particle P.

Secondly, the first secondary particle 1 and the second carbon source are mixed, and the second secondary particle 2 is formed, as shown in a step S2. The second secondary particle 2 is formed by an aggregation of a plurality of second primary particles 20. Each one of the second primary particles 20 includes one of the first primary particles 10 and a second carbon coating portion C2 coated on the one of the first primary particles 10. The first carbon source has a first weight percentage relative to the lithium metal phosphate particle P. The second carbon source has a second weight percentage relative to the lithium metal phosphate particle P. The first weight percentage of the first carbon source is equal to or less than the second weight percentage of the second carbon source.

Finally, the second secondary particle 2 is subjected to the second heat treatment, and the carbon-coated cathode material 3 is formed, as shown in a step S3. The carbon-coated cathode material 3 includes the lithium metal phosphate particle P and the carbon coating layer C. The carbon coating layer C is coated on the lithium metal phosphate particle P. The carbon coating layer C is formed by the first carbon coating portion C1 and the second carbon coating portion C2.

In the embodiment, a lithium matrix of the lithium metal phosphate matrix is a lithium hydroxide (LiOH), a lithium carbonate (Li₂CO₃), a lithium phosphate (Li₃PO₄), a lithium hydrogen phosphate (Li₂HPO₄), or a lithium dihydrogen phosphate (LiH₂PO₄). A phosphorus matrix of the lithium metal phosphate matrix is a phosphoric acid (H₃PO₄), a ammonium dihydrogen phosphate (NH₄H₂PO₄) or ammonium hydrogen phosphate ((NH₄)₂HPO₄). A metal matrix of the lithium metal phosphate matrix is a metal oxide (M₂O₃, MO₂), a phosphate (MPO₄), a carbonate (MCO₃), a sulfate (MSO₄), a nitrate (MNO₃) or a metal (M). In the embodiment, the first carbon source is a fructose. In other embodiment, the first carbon source is a carbon compound such as a carbohydrate other than fructose or an aromatic compound. The present disclosure is not limited thereto. In the embodiment, the lithium metal phosphate matrix and the first carbon source are subjected to a grinding process and a mixing process. The mixing process is, for example, a spray drying process. Preferably but not exclusively, the grinding process of the lithium metal phosphate matrix and the first carbon source is ball milling the lithium metal phosphate matrix, the first carbon source and a surfactant. The surfactant is a non-ionic surfactant.

In the embodiment, the lithium metal phosphate particle P includes a Li-M-O based material, and M is one selected from a group consisting of nickel, cobalt, manganese, magnesium, titanium, aluminum, tin, chromium, vanadium, molybdenum and a combination thereof. In the embodiment, the first carbon source has a first median diameter (D50) ranged from 10 nm to 50 nm. The second carbon source has a second median diameter ranged from 10 nm to 50 nm. The first median diameter of the first carbon source and the second median diameter of the second carbon source are obtained by an analysis of a scanning electron microscope (SEM) or a transmission electron microscope (TEM). Certainly, the present disclosure is not limited thereto. Other instruments that can perform surface analysis are suitable for detecting the first median diameter of the first carbon source and the second median diameter of the second carbon source. In the embodiment, the lithium metal phosphate particle has a median diameter ranged from 0.05 µm to 2 µm.

The first weight percentage of the first carbon source is equal to or less than 0.5 wt%, and the second weight percentage of the second carbon source is ranged from 0.4 wt% to 2 wt%. By adding less carbon in the first heat treatment, a dot-like structure facilitating the adherence of the second carbon source added later is formed. Thereby, the problem of decreased lithium ion transfer rate due to excessive addition of carbon is prevented, and the discharge performance of the secondary battery is ensured.

In the embodiment, the first secondary particle 1 has a specific surface area ranged from 5 m²/g to 30 m²/g. Preferably but not exclusively, the specific surface area of the first secondary particle 1 is detected by a BET surface area analysis. In the embodiment, the preparation method of the carbon-coated cathode material further includes a step of grinding the first secondary particle. The first secondary particle 1 has a median diameter ranged from 0.1 µm to 2 µm after grinding.

In the embodiment, the first secondary particle 1 and the second carbon source further subjected to a grinding process before mixing. The first secondary particle 1 has a median diameter ranged from 0.5 µm to 1.5 µm after the grinding process. The second carbon source has a median diameter ranged from 0.5 µm to 1.5 µm after the grinding process. Preferably but not exclusively, the grinding process of the first secondary particle 1 and the second carbon source is ball milling the first secondary particle 1, the second carbon source and a surfactant. The surfactant is a non-ionic surfactant. The first secondary particle 1 and the second carbon source are mixed to form the second secondary particle 2 through a spray drying process. The second secondary particle 2 has a median diameter ranged from 2 µm to 50 µm.

In the embodiment, the first heat treatment has a first highest temperature ranged from 500 °C to 700 °C, and the first heat treatment has a first soaking time ranged from 1 hour to 5 hours at the first highest temperature of the first heat treatment. The second heat treatment has a second highest temperature ranged from 700 °C to 850 °C, and the second heat treatment has a second soaking time ranged from 1 hour to 5 hours at the second highest temperature of the second heat treatment. In the embodiment, the first heat treatment has a first heating rate of 3 °C/min, and the second heat treatment has a second heating rate of 3 °C/min.

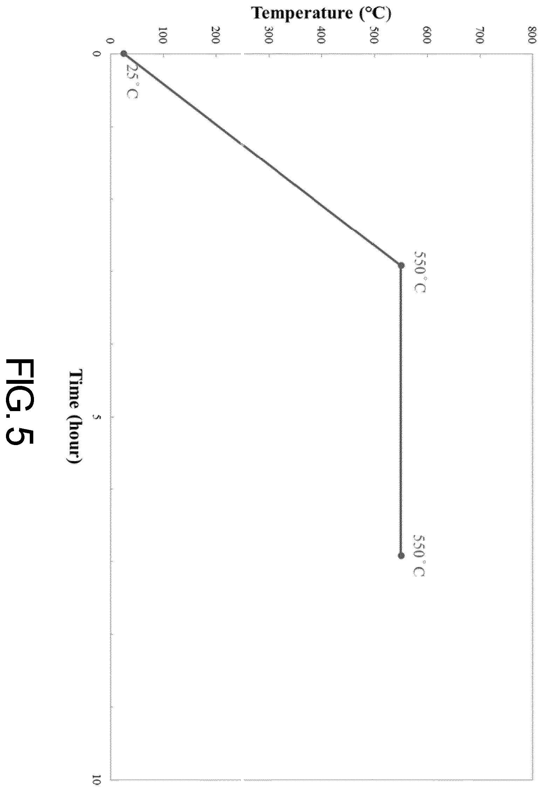

Refer to FIG. 5. FIG. 5 is a time-temperature curve of a first heat treatment according to an embodiment of the present disclosure. In the embodiment, the first heat treatment has a temperature of room temperature (25 °C) at the beginning. After that, the temperature of the first heat treatment is increased to 550 °C at a heating rate of 3 °C/min. Finally, the temperature of the first heat treatment is held at 550 °C for 4 hours.

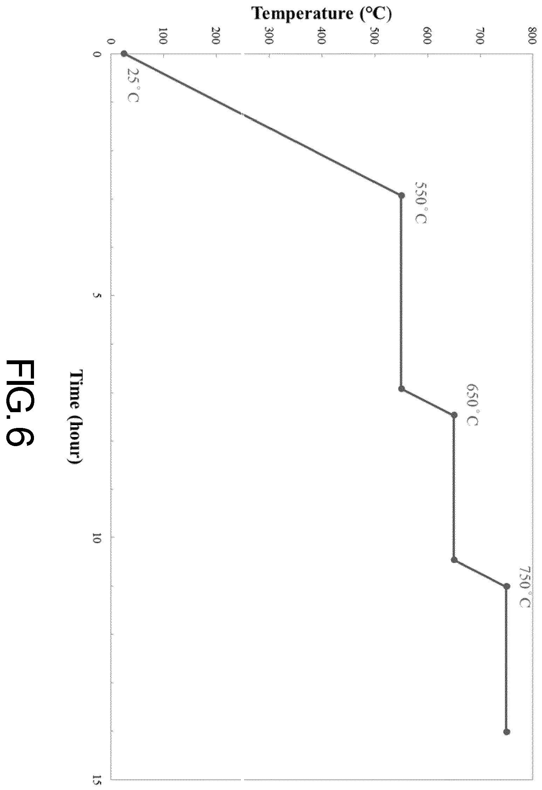

Refer to FIG. 6. FIG. 6 is a time-temperature curve of a second heat treatment according to an embodiment of the present disclosure. In the embodiment, the second heat treatment has a temperature of room temperature (25 °C) at the beginning. Secondly, the temperature of the second heat treatment is increased to 550 °C at a heating rate of 3 °C/min, and is held at 550 °C for 4 hours. After that, the temperature of the second heat treatment is increased to 650 °C at a heating rate of 3 °C/min, and is held at 650 °C for 4 hours. Finally, the temperature of the second heat treatment is increased to 750 °C at a heating rate of 3 °C/min, and is held at 750 °C for 3 hours.

The following examples illustrate the preparation method and efficacy of the present disclosure.

### Demonstrative example

A lithium metal phosphate matrix, a first carbon source and a surfactant are subjected to a grinding process. After that, the lithium metal phosphate matrix, the first carbon source and the surfactant and mixed through a spray drying process. The surfactant is an alkyl polyglycoside (APG), which is a non-ionic surfactant. The grinding process of the lithium metal phosphate matrix, the first carbon source and the surfactant is a ball milling through zirconia balls. The ratio of a total weight of the lithium metal phosphate matrix, the first carbon source and the surfactant to a total weight of the zirconia balls is ranged from 1:0.45 to 1:1.31. The grinding process has a rotating speed between 250 rpm to 650 rpm and an operating time between 1 to 4 hours. The product of the grinding process is subjected to a sintering process, and a first secondary particle is formed. The sintering process is to increase the temperature to 550 °C at a heating rate of 3 °C/min and then hold the temperature for 4 hours. The first secondary particle of the demonstrative example includes a lithium metal phosphate particle and a first carbon coating portion formed by the first carbon source. With an analysis of a scanning electron microscope (SEM) or a transmission electron microscope (TEM), it is detected that the first carbon coating portion has a dot-like structure. Each carbon dot of the dot-like structure has a median diameter ranged from 10 nm to 50 nm. The first carbon source has a first weight percentage of 0.20 wt% relative to the lithium metal phosphate particle. The first secondary particle has a specific surface area ranged of 12.8 m²/g. The specific surface area of the first secondary particle is detected by a BET surface area analysis.

The first secondary particle is ground by ball milling, and the first secondary particle has a median diameter ranged from 0.1 µm to 2 µm after grinding. After that, the first secondary particle, a second carbon source and another surfactant are ground by ball milling and mixed through a spray drying process, and a second secondary particle is formed. The median diameter of the first secondary particle is ranged from 0.5 µm to 1.5 µm after being ground for the second time. The second carbon is a fructose. The another surfactant is a polyvinylpyrrolidone (PVP-K30), which is an non-ionic surfactant. The second carbon source has a second weight percentage of 1.05 wt% relative to the lithium metal phosphate particle. The second secondary particle has a median diameter ranged from 2 µm to 50 µm.

Finally, the second secondary particle is subjected to a sintering process, and a carbon-coated cathode material is formed. The temperature of the sintering process is increased to 550 °C at a heating rate of 3 °C/min, and is held at 550 °C for 4 hours. After that, the temperature of the sintering process is increased to 650 °C at a heating rate of 3 °C/min, and is held at 650 °C for 4 hours. Finally, the temperature of the sintering process is increased to 750 °C at a heating rate of 3 °C/min, and is held at 750 °C for 3 hours. The carbon-coated cathode material of the demonstrative example has a median diameter of 30.46 µm. The carbon-coated cathode material of the demonstrative example has a specific surface area of 11.80 m²/g. The specific surface area of the carbon-coated cathode material is detected by a BET surface area analysis.

### Comparative example

A preparation method of the comparative example and the demonstrative example thereof are roughly the same. However, a first carbon source of the comparative example has a first weight percentage of 1.01 % relative to a lithium metal phosphate particle of the comparative example. A second carbon source of the comparative example has a second weight percentage of 0.28 % relative to the lithium metal phosphate particle of the comparative example. A first secondary particle of the comparative example has a specific surface area of 18.24 m²/g. The specific surface area of the first secondary particle is detected by a BET surface area analysis. In other words, the total weight of the first carbon source and the second carbon source of the comparative example is approximately the same as the total weight of the first carbon source and the second carbon source of the demonstrative example. However, the first weight of the first carbon source of the comparative example is greater than the first weight of the first carbon source of the demonstrative example.

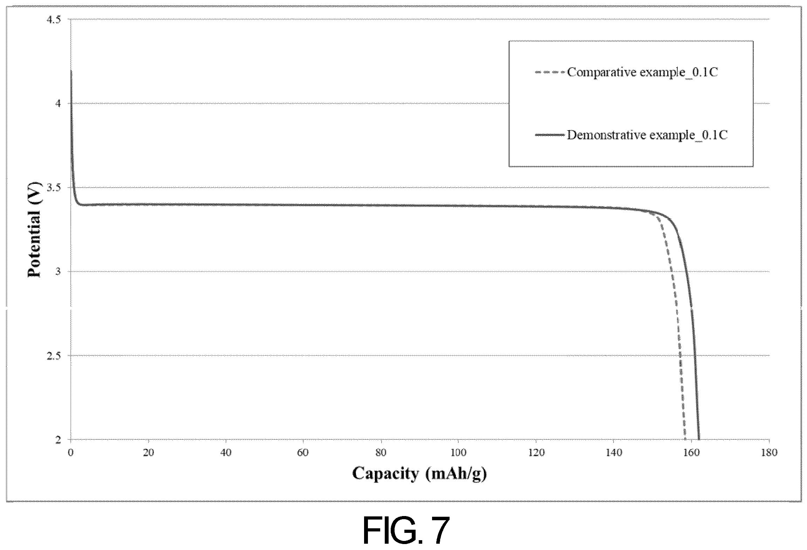

Refer to FIG. 7. FIG. 7 is a charge-discharge characteristic diagram of a comparative example and a demonstrative example at a C-rate of 0.1C. The following table 1 shows the testing results. The testing results are obtained by testing batteries formed by positive pole pieces coated with carbon-coated cathode materials of the comparative example and the demonstrative example, respectively. The test potential range is 4.2V to 2V. As shown in table 1, the demonstrative example has a maximum capacity of 162 mAh/g at a C-rate of 0.1C. The maximum capacity of the demonstrative example has a small increase compared to a maximum capacity of the comparative example. It can be seen that by forming a first carbon coating portion with a dot-like structure on a structure surface in advance, subsequently added carbon is easily adhered to the particle surface through the cohesive force between the same substances. Thereby, a uniform carbon coating layer is formed. Furthermore, controlling the weight of the carbon added in advance facilitates the generation of the dot-like structure, and the problem of decreased lithium ion transfer rate due to excessive addition of carbon is prevented. Accordingly, the maximum capacity of the carbon-coated cathode material of the present disclosure is increased, and the discharge performance is improved.

**Table 1**

| | maximum capacity at C-rate of 0.1C (mAh/g) | maximum capacity increase percentage compared to the comparative example |
|---|---|---|
| Comparative example | 158 | - |
| Demonstrative example | 162 | 2.53% |

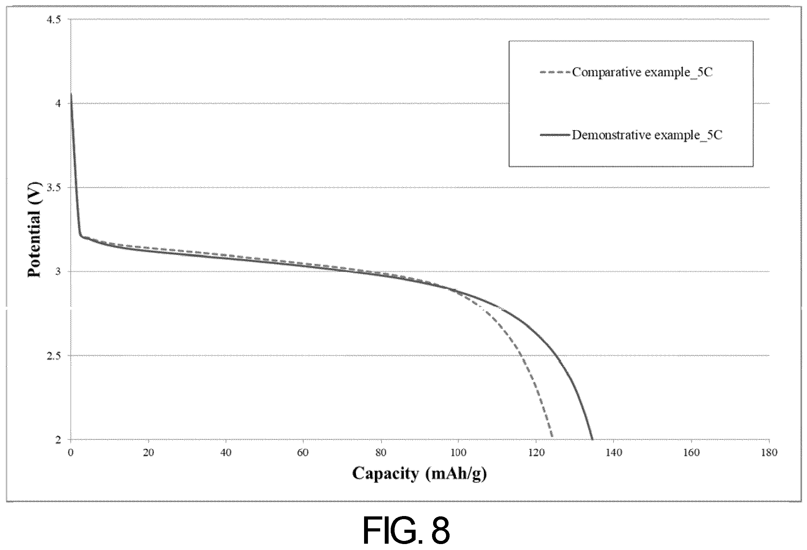

Refer to FIG. 8. FIG. 8 is a charge-discharge characteristic diagram of the comparative example and the demonstrative example at a C-rate of 5C. The following table 2 shows the testing results. The testing results are obtained by testing batteries formed by positive pole pieces coated with carbon-coated cathode materials of the comparative example and the demonstrative example, respectively. The test potential range is 4.2V to 2V. As shown in table 2, the demonstrative example has a maximum capacity of 134 mAh/g at a C-rate of 5C. The maximum capacity of the demonstrative example has a significant increase compared to a maximum capacity of the comparative example. It can be seen that by forming a first carbon coating portion with a dot-like structure on a structure surface in advance, subsequently added carbon is easily adhered to the particle surface through the cohesive force between the same substances. Thereby, a uniform carbon coating layer is formed. Furthermore, controlling the weight of the carbon added in advance facilitates the generation of the dot-like structure, and the problem of decreased lithium ion transfer rate due to excessive addition of carbon is prevented. Accordingly, the maximum capacity of the carbon-coated cathode material of the present disclosure is increased, and the discharge performance is improved.

**Table 2**

| | maximum capacity at C-rate of 5C (mAh/g) | maximum capacity increase percentage compared to the comparative example |
|---|---|---|
| Comparative example | 124 | - |
| Demonstrative example | 134 | 8.06% |

As stated above, a carbon-coated cathode material and a preparation method thereof for improving a discharge performance of a secondary battery is provided. The carbon-coated cathode material includes a lithium metal phosphate particle and a carbon coating layer, and the carbon coating layer is coated on the lithium metal phosphate particle. The carbon coating layer is formed by, for example, two heat treatments. Two carbon sources such as carbohydrate are added in the two heat treatments, respectively. A first carbon coating portion is formed on the lithium metal phosphate particle by adding the first carbon source in the first heat treatment. With the first carbon coating portion, the second carbon source added in the second heat treatment is easily adhered on the surface of the particle through the cohesive force between the same substances, and the uniform carbon coating layer is formed after the second heat treatment. Preferably but not exclusively, the weight of the first carbon source is equal to or less than the weight of the second carbon source. The first carbon source has a first weight percentage relative to the lithium metal phosphate particle, and the first weight percentage of the first carbon source is equal to or less than 0.5 wt%. The second carbon source has a second weight percentage relative to the lithium metal phosphate particle, and the second weight percentage of the second carbon source is ranged from 0.4 wt% to 2 wt%. By adding less carbon in the first heat treatment, a first carbon coating portion with a dot-like structure is formed. The dot-like structure facilitates the adherence of the second carbon source added later. Each carbon dot of the dot-like structure has a median diameter ranged from 10 nm to 50 nm. The median diameter is obtained by an analysis of a scanning electron microscope (SEM) or a transmission electron microscope (TEM). Furthermore, by controlling the weight of added carbon, the problem of decreased lithium ion transfer rate due to excessive addition of carbon is prevented, and the discharge performance of the secondary battery is ensured. Preferably but not exclusively, the first heat treatment has a first highest temperature ranged from 500 °C to 700 °C, so as to facilitate the nucleation of lithium metal phosphate particles and the cracking of the first carbon source. The preparation method of the carbon-coated cathode material of the present disclosure is simple, and the carbon-coated cathode material formed thereby has good discharge performance. Specifically, the carbon-coated cathode material maintains high capacity at different charge and discharge rates (C-rate).

## Claims

1. A carbon-coated cathode material (3), comprising:
a lithium metal phosphate particle (P); and
a carbon coating layer (C) coated on the lithium metal phosphate particle (P), wherein the carbon coating layer (C) is formed by a first heat treatment and a second heat treatment, wherein a first carbon source is added in the first treatment to form a first carbon coating portion, a second carbon source is added in the second heat treatment to form a second carbon coating portion, and the carbon coating layer is formed by the first carbon coating portion and the second carbon coating portion, wherein the first carbon source has a first weight percentage relative to the lithium metal phosphate particle (P), the second carbon source has a second weight percentage relative to the lithium metal phosphate particle (P), and the first weight percentage of the first carbon source is equal to or less than the second weight percentage of the second carbon source, wherein the first carbon source and the second carbon source are carbohydrate,
**characterized in that** the first weight percentage of the first carbon source is equal to or less than 0.5 wt%, and the second weight percentage of the second carbon source is ranged from 0.4 wt% to 2 wt%.

2. The carbon-coated cathode material (3) according to claim 1, wherein the lithium metal phosphate particle (P) comprises a Li-M-O based material, and M is one selected from a group consisting of nickel, cobalt, manganese, magnesium, titanium, aluminum, tin, chromium, vanadium, molybdenum and a combination thereof.

3. The carbon-coated cathode material (3) according to claim 1, wherein the first carbon portion has a plurality of carbon dots, and each of the plurality of carbon dots has a first median diameter ranged from 10 nm to 50 nm, and the first median diameter is obtained by an analysis of a scanning electron microscope or a transmission electron microscope.

4. The carbon-coated cathode material (3) according to claim 1, wherein the lithium metal phosphate particle (P) has a median diameter ranged from 0.05 µm to 2 µm.

5. A preparation method of a carbon-coated cathode material (3), comprising steps of:
(a) mixing a lithium metal phosphate mixture and a first carbon source and subjecting the lithium metal phosphate mixture and the first carbon source to a first heat treatment to form a first secondary particle (1), wherein the first secondary particle (1) is formed by an aggregation of a plurality of first primary particles (10), wherein each one of the plurality of first primary particles (10) comprises a lithium metal phosphate particle (P) and a first carbon coating portion (C1), and the first carbon coating portion (C1) is coated on the lithium metal phosphate particle (P);
(b) mixing the first secondary particle (1) and a second carbon source to form a second secondary particle (2), wherein the second secondary particle (2) is formed by an aggregation of a plurality of second primary particles (20), wherein each one of the second primary particles (20) comprises one of the first primary particles (10) and a second carbon coating portion (C2) coated on the one of the first primary particles (10), wherein the first carbon source has a first weight percentage relative to the lithium metal phosphate particle (P), the second carbon source has a second weight percentage relative to the lithium metal phosphate particle (P), and the first weight percentage of the first carbon source is equal to or less than the second weight percentage of the second carbon source, wherein the first carbon source and the second carbon source are carbohydrate; and
(c) subjecting the second secondary particle (2) to a second heat treatment to form the carbon-coated cathode material (3), wherein the carbon-coated cathode material (3) comprises the lithium metal phosphate particle (P) and a carbon coating layer (C), and the carbon coating layer (C) is coated on the lithium metal phosphate particle (P), wherein the carbon coating layer (C) is formed by the first carbon coating portion (C1) and the second carbon coating portion (C2),
**characterized in that** the first weight percentage of the first carbon source is equal to or less than 0.5 wt%, and the second weight percentage of the second carbon source is ranged from 0.4 wt% to 2 wt%.

6. The preparation method according to claim 5, wherein the lithium metal phosphate particle (P) comprises a Li-M-O based material, and M is one selected from a group consisting of nickel, cobalt, manganese, magnesium, titanium, aluminum, tin, chromium, vanadium, molybdenum and a combination thereof.

7. The preparation method according to claim 5, wherein the first carbon portion has a plurality of carbon dots, and each of the plurality of carbon dots has a first median diameter ranged from 10 nm to 50 nm, and the first median diameter is obtained by an analysis of a scanning electron microscope or a transmission electron microscope.

8. The preparation method according to claim 5, wherein the lithium metal phosphate particle (P) has a median diameter ranged from 0.05 µm to 2 µm.

9. The preparation method according to claim 5, wherein the first secondary particle (1) has a specific surface area ranged from 5 m²/g to 30 m²/g.

10. The preparation method according to claim 5, wherein the step (a) further comprises a step of:
(a1) grinding the first secondary particle (1), wherein the first secondary particle (1) has a median diameter ranged from 0.1 µm to 2 µm after grinding.

11. The preparation method according to claim 5, wherein the first secondary particle (1) and the second carbon source are ground before mixing, wherein the first secondary particle (1) has a median diameter ranged from 0.05 µm to 2 µm after grinding, and the second carbon source has a median diameter ranged from 0.05 µm to 2 µm after grinding.

12. The preparation method according to claim 5, wherein the first secondary particle (1) and the second carbon source are mixed to form the second secondary particle (2) through a spray drying process, wherein the second secondary particle (2) has a median diameter ranged from 2 µm to 50 µm.

13. The preparation method according to claim 5, wherein the first heat treatment has a first highest temperature ranged from 500 °C to 700 °C, and the first heat treatment has a first soaking time ranged from 1 hour to 5 hours at the first highest temperature of the first heat treatment, wherein the second heat treatment has a second highest temperature ranged from 700 °C to 850 °C, and the second heat treatment has a second soaking time ranged from 1 hour to 5 hours at the second highest temperature of the second heat treatment.

## Patentansprüche

1. Kohlenstoffbeschichtetes Kathodenmaterial (3), umfassend:
ein Lithiummetallphosphatpartikel (P); und
eine Kohlenstoffbeschichtungsschicht (C), die auf das Lithiummetallphosphatpartikel (P) aufgebracht ist, wobei die Kohlenstoffbeschichtungsschicht (C) durch eine erste Wärmebehandlung und eine zweite Wärmebehandlung gebildet wird, wobei bei der ersten Behandlung eine erste Kohlenstoffquelle zugegeben wird, um einen ersten Kohlenstoffbeschichtungsteil zu bilden, bei der zweiten Wärmebehandlung eine zweite Kohlenstoffquelle zugegeben wird, um einen zweiten Kohlenstoffbeschichtungsteil zu bilden, und die Kohlenstoffbeschichtungsschicht durch den ersten Kohlenstoffbeschichtungsteil und den zweiten Kohlenstoffbeschichtungsteil gebildet wird, wobei die erste Kohlenstoffquelle einen ersten Gewichtsanteil relativ zum Lithiummetallphosphatpartikel (P) aufweist, die zweite Kohlenstoffquelle einen zweiten Gewichtsanteil relativ zum Lithiummetallphosphatpartikel (P) aufweist und der erste Gewichtsanteil der ersten Kohlenstoffquelle gleich oder kleiner als der zweite Gewichtsanteil der zweiten Kohlenstoffquelle ist, wobei die erste Kohlenstoffquelle und die zweite Kohlenstoffquelle Kohlenhydrate sind,
**dadurch gekennzeichnet, dass** der erste Gewichtsanteil der ersten Kohlenstoffquelle gleich oder kleiner als 0,5 Gew.-% ist und der zweite Gewichtsanteil der zweiten Kohlenstoffquelle im Bereich von 0,4 Gew.-% bis 2 Gew.-% liegt.

2. Kohlenstoffbeschichtetes Kathodenmaterial (3) nach Anspruch 1, wobei der Lithiummetallphosphatpartikel (P) ein auf Li-M-O basierendes Material umfasst und M ein Element ist, das aus einer Gruppe ausgewählt ist, bestehend aus Nickel, Kobalt, Mangan, Magnesium, Titan, Aluminium, Zinn, Chrom, Vanadium, Molybdän und einer Kombination davon.

3. Kohlenstoffbeschichtetes Kathodenmaterial (3) nach Anspruch 1, wobei der erste Kohlenstoffteil eine Vielzahl von Kohlenstoffpunkten aufweist und jeder der Vielzahl von Kohlenstoffpunkten einen ersten mittleren Durchmesser im Bereich von 10 nm bis 50 nm aufweist, und der erste mittlere Durchmesser durch eine Analyse mittels eines Rasterelektronenmikroskops ( ) oder eines Transmissionselektronenmikroskops ermittelt wird.

4. Kohlenstoffbeschichtetes Kathodenmaterial (3) nach Anspruch 1, wobei das Lithiummetallphosphatpartikel (P) einen mittleren Durchmesser im Bereich von 0,05 µm bis 2 µm aufweist.

5. Herstellungsverfahren für ein kohlenstoffbeschichtetes Kathodenmaterial (3), umfassend die folgenden Schritte:
(a) Mischen eines Lithiummetallphosphatgemisches und einer ersten Kohlenstoffquelle und Unterziehen des Lithiummetallphosphatgemisches und der ersten Kohlenstoffquelle einer ersten Wärmebehandlung, um ein erstes Sekundärpartikel (1), wobei das erste Sekundärpartikel (1) durch Aggregation einer Vielzahl von ersten Primärpartikeln (10) gebildet wird, wobei jedes der Vielzahl von ersten Primärpartikeln (10) ein Lithiummetallphosphatpartikel (P) und einen ersten Kohlenstoffbeschichtungsteil (C1) umfasst und der erste Kohlenstoffbeschichtungsteil (C1) auf das Lithiummetallphosphatpartikel (P) aufgebracht ist;
(b) Mischen des ersten Sekundärpartikels (1) und einer zweiten Kohlenstoffquelle, um ein zweites Sekundärpartikel (2) zu bilden, wobei das zweite Sekundärpartikel (2) durch Aggregation einer Vielzahl von zweiten Primärpartikeln (20) gebildet wird, wobei jedes der zweiten Primärpartikel (20) eines der ersten Primärpartikel (10) und einen zweiten Kohlenstoffbeschichtungsteil (C2) umfasst, der auf das eine der ersten Primärpartikel (10) aufgebracht ist, wobei die zweite Kohlenstoffquelle einen ersten Gewichtsanteil relativ zum Lithiummetallphosphatpartikel (P) aufweist, die zweite Kohlenstoffquelle einen zweiten Gewichtsanteil relativ zum Lithiummetallphosphatpartikel (P) aufweist und der erste Gewichtsanteil der ersten Kohlenstoffquelle gleich oder kleiner als der zweite Gewichtsanteil der zweiten Kohlenstoffquelle ist, wobei die erste Kohlenstoffquelle und die zweite Kohlenstoffquelle Kohlenhydrate sind; und
(c) Unterziehen des zweiten Sekundärpartikels (2) einer zweiten Wärmebehandlung, um das kohlenstoffbeschichtete Kathodenmaterial (3) zu bilden, wobei das h e kohlenstoffbeschichtete Kathodenmaterial (3) das Lithiummetallphosphatpartikel (P) und eine Kohlenstoffbeschichtungsschicht (C) umfasst, und die Kohlenstoffbeschichtungsschicht (C) auf das Lithiummetallphosphatpartikel (P) aufgebracht ist, wobei die Kohlenstoffbeschichtungsschicht (C) aus dem ersten Kohlenstoffbeschichtungsteil (C1) und dem zweiten Kohlenstoffbeschichtungsteil (C2) gebildet ist,
**dadurch gekennzeichnet, dass** der erste Gewichtsanteil der ersten Kohlenstoffquelle gleich oder kleiner als 0,5 Gew.-% ist und der zweite Gewichtsanteil der zweiten Kohlenstoffquelle im Bereich von 0,4 Gew.-% bis 2 Gew.-% liegt.

6. Herstellungsverfahren nach Anspruch 5, wobei der Lithiummetallphosphatpartikel (P) ein auf Li-M-O basierendes Material umfasst und M ein Element ist, das aus einer Gruppe ausgewählt ist, bestehend aus Nickel, Kobalt, Mangan, Magnesium, Titan, Aluminium, Zinn, Chrom, Vanadium, Molybdän und einer Kombination davon.

7. Herstellungsverfahren nach Anspruch 5, wobei der erste Kohlenstoffteil eine Vielzahl von Kohlenstoffpunkten aufweist und jeder der Vielzahl von Kohlenstoffpunkten einen ersten Median-Durchmesser im Bereich von 10 nm bis 50 nm aufweist, und der erste Median-Durchmesser durch eine Analyse mittels eines Rasterelektronenmikroskops oder eines Transmissionselektronenmikroskops ermittelt wird.

8. Herstellungsverfahren nach Anspruch 5, wobei das Lithiummetallphosphatpartikel (P) einen mittleren Durchmesser im Bereich von 0,05 µm bis 2 µm aufweist.

9. Herstellungsverfahren nach Anspruch 5, wobei das erste Sekundärpartikel (1) eine spezifische Oberfläche im Bereich von 5 m²/g bis 30 m²/g aufweist.

10. Herstellungsverfahren nach Anspruch 5, wobei der Schritt (a) ferner einen Schritt umfasst, bei dem:
(a1) Mahlen des ersten Sekundärpartikels (1), wobei das erste Sekundärpartikel (1) nach dem Mahlen einen mittleren Durchmesser im Bereich von 0,1 µm bis 2 µm aufweist.

11. Herstellungsverfahren nach Anspruch 5, wobei das erste Sekundärpartikel (1) und die zweite Kohlenstoffquelle vor dem Mischen gemahlen werden, wobei das erste Sekundärpartikel (1) nach dem Mahlen einen mittleren Durchmesser im Bereich von 0,05 µm bis 2 µm aufweist und die zweite Kohlenstoffquelle nach dem Mahlen einen mittleren Durchmesser im Bereich von 0,05 µm bis 2 µm aufweist.

12. Herstellungsverfahren nach Anspruch 5, wobei das erste Sekundärpartikel (1) und die zweite Kohlenstoffquelle gemischt werden, um durch ein Sprühtrocknungsverfahren das zweite Sekundärpartikel (2) zu bilden, wobei das zweite Sekundärpartikel (2) einen Median-Durchmesser im Bereich von 2 µm bis 50 µm aufweist.

13. Herstellungsverfahren nach Anspruch 5, wobei die erste Wärmebehandlung eine erste Höchsttemperatur im Bereich von 500 °C bis 700 °C aufweist und die erste Wärmebehandlung eine erste Haltezeit im Bereich von 1 Stunde bis 5 Stunden bei der ersten Höchsttemperatur der ersten Wärmebehandlung aufweist, wobei die zweite Wärmebehandlung eine zweite Höchsttemperatur im Bereich von 700 °C bis 850 °C aufweist, und die zweite Wärmebehandlung eine zweite Haltezeit im Bereich von 1 Stunde bis 5 Stunden bei der zweiten höchsten Temperatur der zweiten Wärmebehandlung aufweist.

## Revendications

1. Un matériau de cathode recouvert de carbone (3), comprenant :
une particule de phosphate de lithium métallique (P) ; et
une couche de revêtement de carbone (C) appliquée sur la particule de phosphate de lithium métallique (P), la couche de revêtement de carbone (C) étant formée par un premier traitement thermique et un deuxième traitement thermique, dans lesquels, lors du premier traitement, une première source de carbone est ajoutée pour former une première partie de revêtement de carbone, lors du deuxième traitement thermique, une deuxième source de carbone est ajoutée pour former une deuxième partie de revêtement de carbone, et la couche de revêtement de carbone est formée par la première partie de revêtement de carbone et la deuxième partie de revêtement de carbone, la première source de carbone présentant une première proportion en poids par rapport à la particule de phosphate de lithium métallique (P), la deuxième source de carbone présentant une deuxi ème proportion en poids par rapport à la particule de phosphate de lithium métallique (P) et la première proportion en poids de la première source de carbone étant égale ou inférieure à la deuxième proportion en poids de la deuxième source de carbone, la première source de carbone et la deuxième source de carbone étant des hydrates de carbone,
**caractérisé en ce que** la première proportion en poids de la première source de carbone est égale ou inférieure à 0,5 % en poids et la deuxième proportion en poids de la deuxième source de carbone se situe dans la plage de 0,4 % à 2 % en poids.

2. Le matériau de cathode revêtu de carbone (3) selon la revendication 1, dans lequel la particule de phosphate de lithium métallique (P) comprend un matériau à base de Li-M-O, M étant un élément choisi parmi un groupe constitué du nickel, du cobalt, du manganèse, du magnésium, du titane, de l'aluminium, de l'étain, du chrome, du vanadium, du molybdène et d'une combinaison de ceux-ci.

3. Le matériau de cathode revêtu de carbone (3) selon la revendication 1, dans lequel la première partie de carbone présente une pluralité de points de carbone et chacun des points de carbone de ladite pluralité présente un premier diamètre moyen compris entre 10 nm et 50 nm, et ledit premier diamètre moyen est déterminé par une analyse au moyen d'un microscope électronique à balayage ( ) ou d'un microscope électronique à transmission.

4. Le matériau de cathode revêtu de carbone (3) selon la revendication 1, dans lequel la particule de phosphate de lithium métallique (P) présente un diamètre moyen compris entre 0,05 µm et 2 µm.

5. Un procédé de fabrication d'un matériau de cathode recouvert de carbone (3), comprenant les étapes suivantes :
(a) mélanger un mélange de phosphate de lithium métallique et une première source de carbone, et soumettre le mélange de phosphate de lithium métallique et la première source de carbone à un premier traitement thermique afin d'obtenir une première particule secondaire (1), la première particule secondaire (1) étant formée par l'agrégation d'une pluralité de premières particules primaires (10), chacune des nombreuses premières particules primaires (10) comprenant une particule de phosphate de lithium métallique (P) et une première partie de revêtement de carbone (C1), et la première partie de revêtement de carbone (C1) étant appliquée sur la particule de phosphate de lithium métallique (P) ;
(b) mélanger la première particule secondaire (1) et une deuxième source de carbone afin de former une deuxième particule secondaire (2), la deuxième particule secondaire (2) étant formée par l'agrégation d'une pluralité de deuxièmes particules primaires (20), chacune desdites particules primaires de deuxième type (20) comprenant l'une desdites particules primaires de premier type (10) et une deuxième partie de revê tement de carbone (C2) appliquée sur ladite particule primaire de premier type (10), la deuxième source de carbone présentant une première proportion en poids par rapport à la particule de phosphate de lithium métallique (P), la deuxième source de carbone présentant une deuxième proportion en poids par rapport à la particule de phosphate de lithium métallique (P) et la première proportion en poids de la première source de carbone étant égale ou inférieure à la deuxième proportion en poids de la deuxième source de carbone, la première source de carbone et la deuxième source de carbone étant des hydrates de carbone ; et
(c) soumettre la deuxième particule secondaire (2) à un deuxième traitement thermique afin de former le matériau de cathode recouvert de carbone (3), le matériau de cathode recouvert de carbone (3) formé par le traitement thermique comprenant la particule de phosphate de lithium métallique (P) et une couche de revêtement de carbone (C), et la couche de revêtement de carbone (C) est appliquée sur la particule de phosphate de lithium métallique (P), la couche de revêtement de carbone (C) étant formée de la première partie de revêtement de carbone (C1) et de la deuxiè me partie de revêtement de carbone (C2),
**caractérisé en ce que** la première proportion en poids de la première source de carbone est égale ou inférieure à 0,5 % en poids et la deuxième proportion en poids de la deuxième source de carbone se situe dans la plage de 0,4 % à 2 % en poids.

6. Le procédé de fabrication selon la revendication 5, dans lequel la particule de phosphate de lithium métallique (P) comprend un matériau à base de Li-M-O, M étant un élément choisi parmi un groupe constitué du nickel, du cobalt, du manganèse, du magnésium, du titane, de l'aluminium, de l'étain, du chrome, du vanadium, du molybdène et d'une combinaison de ceux-ci.

7. Le procédé de fabrication selon la revendication 5, dans lequel la première partie de carbone comporte une pluralité de points de carbone et chacun des points de carbone de ladite pluralité présente un premier diamètre médian compris entre 10 nm et 50 nm, ledit premier diamètre médian étant déterminé par analyse au moyen d'un microscope électronique à balayage ou d'un microscope électronique à transmission.

8. Le procédé de fabrication selon la revendication 5, dans lequel la particule de phosphate de lithium métallique (P) présente un diamètre moyen compris entre 0,05 µm et 2 µm.

9. Le procédé de fabrication selon la revendication 5, dans lequel la première particule secondaire (1) présente une surface spécifique comprise entre 5 m²/g et 30 m²/g.

10. Le procédé de fabrication selon la revendication 5, dans lequel l'étape (a) comprend en outre une étape dans laquelle :
(a1) le broyage de la première particule secondaire (1), la première particule secondaire (1) présentant, après broyage, un diamètre moyen compris entre 0,1 µm et 2 µm.

11. Le procédé de fabrication selon la revendication 5, dans lequel la première particule secondaire (1) et la deuxième source de carbone sont broyées avant le mélange, la première particule secondaire (1) présentant, après broyage, un diamètre moyen compris entre 0,05 µm et 2 µm et la deuxième source de carbone présentant, après broyage, un diamètre moyen compris entre 0,05 µm et 2 µm.

12. Le procédé de fabrication selon la revendication 5, dans lequel la première particule secondaire (1) et la deuxième source de carbone sont mélangées afin de former la deuxième particule secondaire (2) par un procédé de séchage par atomisation, la deuxième particule secondaire (2) présentant un diamètre médian compris entre 2 µm et 50 µm.

13. Le procédé de fabrication selon la revendication 5, dans lequel le premier traitement thermique présente une première température maximale comprise entre 500 °C et 700 °C et le premier traitement thermique présente un premier temps de maintien compris entre 1 heure et 5 heures à la première température maximale du premier traitement thermique, le deuxième traitement thermique présentant une deuxi è me température maximale comprise entre 700 °C et 850 °C, et le deuxième traitement thermique présentant un deuxième temps de maintien compris entre 1 heure et 5 heures à la deuxième température maximale du deuxième traitement thermique.
